# EUROPÄISCHE PATENTSCHRIFT

(11) **EP 2 500 610 B1**
(45) Veröffentlichungstag und Bekanntmachung des Hinweises auf die Patenterteilung: **30.11.2016**
(21) Anmeldenummer: 11002067.4
(22) Anmeldetag: 12.03.2011
(51) Int. Cl.: F01N 3/20, F16K 31/06

(54) **Vorrichtung zur Durchflussregelung eines flüssigen oder gasförmigen Mediums**
Device for regulating the flow of a fluid or gaseous medium
Dispositif destiné à la régulation du débit d'un milieu liquide ou gazeux

(43) Veröffentlichungstag der Anmeldung: 19.09.2012
(73) Patentinhaber: Asco Numatics GmbH, 75248 Ölbronn-Dürrn (DE)
(72) Erfinder: Ams, Felix, 75236 Kämpfelbach (DE); Wegehingel, Stefan, 75180 Pforzheim (DE); Clemente, Matthieu, 75015 Bretten (DE)
(74) Vertreter: Witte, Weller & Partner Patentanwälte mbB

(56) Entgegenhaltungen:
- DE-A1- 3 801 035
- DE-A1- 10 112 661
- DE-A1-102008 023 182
- GB-A- 2 189 010
- US-A1- 2006 017 034

## Beschreibung

Die Erfindung bezieht sich auf eine Vorrichtung zur Durchflussregelung eines flüssigen oder gasförmigen Mediums, insbesondere zur Dosierung eines zuzumischenden Fluids in ein Abgasreinigungssystem, mit einem Elektromagneten, der in einem Magnetgehäuse eine Magnetspule mit Magnetkern und endseitiger Magnetplatte aufweist und ein Ventilglied in einem Ventilraum eines Ventilkörpers zur Steuerung eines dortigen Ventilsitzes betätigt.

Es sind Vorrichtungen dieser Art bekannt (DE 10 2004 025 062 B4), bei denen das Ventilglied aus einem langen Stößel in Form eines Magnetkerns innerhalb einer Magnetspule besteht. Ein derartiges Dosierventil sollte gefriertauglich sein, wenn es für eine SCR-Abgasnachbehandlungseinrichtung zum Einsatz kommen soll, wobei als zu steuerndes Medium ein Reduktionsmittel, insbesondere eine Harnstoff-Wasser-Lösung, verwendet wird. Aufgrund des hohen Wasseranteils in der Lösung gefriert die in Betrieb unter Druck stehende Lösung schon bei relativ niedrigen negativen Celsiusgraden, z. B. bei etwa minus 11° Celsius. Damit geht eine Volumenzunahme um z. B. etwa 10 % einher. Dadurch kann die Vorrichtung, und zwar sowohl der Elektromagnet als auch das Dosierventil, Schaden nehmen oder gar zerstört werden.

Aus der GB 2 189 010 A ist ein elektromagnetisches Ventil zur Steuerung einer Fluidströmung bekannt, das einen Körper mit einem Einlass und einem Auslass für das Fluid, eine Spule und einen Anker aus einem elektromagnetischen Werkstoff aufweist, der in den elektromagnetischen Flusspfad einbringbar ist und auf diese Weise durch den Fluss in Richtung auf den oder weg vom Einlass oder Auslass gedrängt wird, wobei der Anker in der Gegenrichtung elastisch vorgespannt ist, wobei der Anker einen Verschlussstopfen für den Einlass oder den Auslass trägt, wobei zumindest einer aus der Menge des Stopfens, des Einlasses und des Auslasses eine Scheibe oder einen Ring aus einem nachgiebigen, elastischen Material aufweist, und wobei die Scheibe oder der Ring in der Bewegungsrichtung des Stopfens auslenkbar ist.

Der Erfindung liegt die Aufgabe zugrunde, eine Vorrichtung der eingangs genannten Art zu schaffen, die gefriersicher ist und auch bei negativen Temperaturgraden mit einhergehender Volumenexpansion einer entsprechenden Wasser enthaltenden Lösung nicht beschädigt oder gar zerstört wird. Bei allem soll die Vorrichtung einfach und kostengünstig sein.

Die Aufgabe wird gelöst durch eine Vorrichtung zur Durchflussregelung eines flüssigen oder gasförmigen Mediums, insbesondere zur Dosierung eines zuzumischenden Fluids in ein Abgasreinigungssystem, mit einem Elektromagneten, der in einem Magnetgehäuse eine Magnetspule mit Magnetkern und endseitiger Magnetplatte aufweist und ein Ventilglied in einem Ventilraum eines Ventilkörpers zur Steuerung eines dortigen Ventilsitzes betätigt, wobei die Magnetspule gegenüber dem Ventilraum deformationsgeschützt und mittels einer Dichtungseinrichtung abgedichtet ist, die mindestens eine zwischen der Magnetspule und dem Magnetkern angeordnete erste Dichtung, die als radiale Dichtung und als Umfangsdichtung um den Magnetkern ausgebildet ist, und mindestens eine zwischen der Magnetspule und der Magnetplatte angeordnete zweite Dichtung und einen Dichtungshalter aufweist, der zwischen der Magnetspule und dem Magnetkern und der Magnetplatte angeordnet ist und die Dichtungen aufnimmt und der einen Ringteil aufweist, der den Magnetkern umfasst und sich an die Magnetspule anschließt und die erste radiale Dichtung enthält, die am Magnetkern anliegt, wobei der Dichtungshalter einen sich axial zwischen der Magnetspule und der Magnetplatte erstreckenden axialen Ringteil aufweist, der an den als Zylinderhülse ausgebildeten Ringteil anschließt und mit diesem einstückig ist, wobei der axiale Ringteil die als axiale Dichtung ausgebildete zweite Dichtung aufnimmt, die an der Magnetplatte anliegt, wobei der Dichtungshalter als im Querschnitt etwa U-förmiger Ring ausgebildet ist, und wobei die U-Basis an der Magnetspule anliegt, der innere U-Schenkel die den Magnetanker umgebende Zylinderhülse bildet und der äußere U-Schenkel sich axial zwischen der Magnetspule und der Magnetplatte erstreckt.

Die Magnetspule ist gegenüber dem Ventilraum mittels einer Dichtungseinrichtung abgedichtet. Dadurch ist vermieden, dass das Medium vom Ventilraum her zur Magnetspule gelangen kann.

Die Dichtungseinrichtung weist eine zwischen der Magnetspule und dem Magnetkern und angeordnete Dichtung auf, die als Umfangsdichtung um den Magnetkern ausgebildet ist.

Die Dichtungseinrichtung weist zwei Dichtungen auf, und zwar mindestens eine erste Dichtung zwischen der Magnetspule und dem Magnetkern, die als radiale Dichtung ausgebildet ist, und mindestens eine zweite Dichtung zwischen der Magnetspule und der Magnetplatte, die als axiale Dichtung ausgebildet ist.

Die Dichtungseinrichtung weist einen metallischen Dichtungshalter auf, der zwischen der Magnetspule und dem Magnetkern und der Magnetplatte angeordnet ist und die mindestens eine zwischen der Magnetspule und der Magnetplatte und/oder dem Magnetkern befindliche Dichtung aufnimmt. Der metallische harte Dichtungshalter wirkt als Schutzplatte in Bezug auf die Magnetspule. Zugleich sind dadurch die Dichtungen gehalten.

Der Dichtungshalter weist einen Ringteil auf, der den Magnetkern umfasst und sich an die Magnetspule anschließt und die eine radiale Dichtung enthält, die am Magnetkern anliegt, wobei der Ringteil z. B. als Zylinderhülse ausgebildet sein kann. Der Dichtungshalter weist einen sich axial zwischen der Magnetspule und der

Magnetplatte erstreckenden axialen Ringteil auf, der die axiale Dichtung enthält, die an der Magnetplatte anliegt.

Der axiale Ringteil schließt sich mit Vorteil an die Zylinderhülse an und ist mit dieser einstückig. Dabei nimmt die Zylinderhülse die radiale Dichtung, die am Magnetanker anliegt, und der axiale Ringteil die axiale Dichtung auf, die an der Magnetplatte anliegt. Die Magnetspule ist hierbei also mittels zweier Dichtungen, nämlich einer radialen sowie einer axialen Dichtung, gegenüber dem Ventilraum zuverlässig abgedichtet.

Der Dichtungshalter ist als im Querschnitt etwa U-förmiger Ring ausgebildet, wobei die U-Basis an der Magnetspule anliegt, der innere U-Schenkel die den Magnetanker umgebende Zylinderhülse bildet und der äußere U-Schenkel sich axial zwischen der Magnetspule und der Magnetplatte erstreckt.

Von Vorteil kann es sein, wenn der Ventilraum zwischen der Magnetplatte und einem den Ventilsitz enthaltenden Ventilkörper vorgesehen ist und mittels einer Dichtung zwischen beiden nach außen abgedichtet ist. In vorteilhafter Weise münden in den Ventilraum die Einlaßöffnung mindestens eines Einlaßkanals und die Auslaßöffnung mindestens eines vorzugsweise zentralen Auslaßkanals.

Von Vorteil kann es sein, wenn das Ventilglied einen Flachanker geringer Masse im Ventilraum zwischen der Magnetplatte und dem Ventilkörper aufweist. Der Flachanker kann eine mittlere, über federnde Schenkel beweglich verbundene Ankerscheibe als betätigbares Ventilglied aufweisen. Die federnden Schenkel können in vorteilhafter Weise als Rückstellfedern ausgebildet sein. Aufgrund dieser Gestaltung kann das Dosierventil schnell schalten, z. B. in weniger als 5 msec öffnen und schließen. Dies gewährleistet bei einer nachgeschalteten Einspritzdüse ein sauberes Einspritzen ohne Vor- und Nachtropfen.

In vorteilhafter Weise kann die Ankerscheibe auf der Seite, die dem Ventilsitz zugewandt ist, eine Dichtungsplatte und auf der gegenüberliegenden Seite mindestens ein Dämpfungsglied aufweisen. Das mindestens eine Dämpfungsglied kann Teil der Dichtungsplatte sein, die aus elastischem Material, z. B. einem Elastomer, gebildet ist.

Der Ventilsitz kann als überstehender, etwa schneidenartiger Ringsitz ausgebildet sein.

Von Vorteil kann es ferner sein, wenn am Magnetkern mindestens eine Feder, z. B. eine zylindrische Schraubenfeder, angreift, die z. B. im Magnetkern aufgenommen ist. Diese Feder kann einerseits am Magnetkern und andererseits am Ventilglied abgestützt und zentriert sein, wobei diese Feder als Schließfeder und zur Sicherung eines vorgegebenen Gegendruckes ausgebildet ist. Dadurch wird die Rückschaltgeschwindigkeit des Dosierventils noch weiter gesteigert.

Eine weitere vorteilhafte Ausführungsform sieht vor, dass der in die Öffnung des Ventilsitzes mündende Auslaßkanal am Ende des Ventilkörpers in Bezug auf eine Aufnahme in einem Gehäuse, das einen anschließenden Fluidauslaß enthält, mittels einer axialen Dichtung abgedichtet ist.

Der mindestens eine Einlaßkanal des Ventilkörpers kann mit dem mindestens einen Zufuhrkanal im Ventilkörper verbunden sein, der mit einem Fluideinlaß des Gehäuses in Verbindung steht.

Von Vorteil kann es sein, wenn der Ventilkörper axial beidseitig des Zufuhrkanals in einer jeweiligen Ringnut eine Umfangsdichtung, z. B. einen Dichtungsring, zur Abdichtung des Ventilkörpers gegenüber der Aufnahme des Gehäuses enthält, in die der Ventilkörper eingesteckt ist. Durch diese Dichtungen ist eine zuverlässige Abdichtung nach außen und zwischen dem Fluideinlaß und dem Fluidauslaß erreicht.

Der Ventilkörper kann stufenförmig sein und auf dem Axialbereich der sich oberhalb des Zufuhrkanals erstreckt, einen größeren Durchmesser aufweisen als auf dem sich unterhalb des Zufuhrkanals erstreckenden Axialbereich. Dadurch ist für den Fall einer Eisbildung mit Volumenzunahme erreicht, dass eine sich daraus ergebende, in Ausschieberichtung der Vorrichtung aus dem Gehäuse wirkende Kraft auf relativ großer Fläche wirken kann und die Vorrichtung gegen die Wirkung einer Gegenfeder aus dem Gehäuse herausschieben kann. Eine etwaige Beschädigung des Ventils wird dadurch verhindert.

Die Vorrichtung eignet sich mit besonderem Vorteil zur Dosierung von Reduktionsmitteln, insbesondere einer Harnstoff-Wasser-Lösung, für eine SCR-Abgasnachbehandlungseinrichtung. Zur Dosierung solcher Reduktionsmittel werden mit Dosierventilen kombinierte Einspritzdüsen in Abgassystemen eingesetzt. Die Vorrichtung gemäß der Erfindung ist für einen solchen Einsatzzweck ohne Beschädigungsgefahr gut geeignet. Das Dosierventil wird beim Gefrieren der Lösung mit einhergehender zehnprozentiger Volumenzunahme nicht beschädigt. Es gewährleistet ferner im nicht gefrorenen Zustand ein gutes Einspritzen/Sprühen sowie zuverlässiges Abdichten nach außen. Aufgrund der geringen Masse des Ventilgliedes ist das Dosierventil in der Lage, in weniger als 5 msec zu öffnen und zu schließen und somit sehr schnell zu schalten. Dadurch wird ein sauberes Einspritzen über die Einspritzdüsen gewährleistet. Aufgrund der axialen Abdichtung am Ende des Ventilkörpers in Bezug auf das Gehäuse ist eine von Lufteinschlüssen freie Verbindung zwischen der Vorrichtung und dem Fluidauslaß des Gehäuses gewährleistet. Die Magnetspule des Elektromagneten als relativ weiches Bauteil ist gegen Beschädigung geschützt. Zum einen dient der metallische Dichtungshalter als mechanischer Schutz. Zum anderen ist durch die mindestens eine radiale Dichtung erreicht, dass das im Ventilraum befindliche und gesteuerte Medium nicht in den Bereich der Magnetspule gelangen kann und beim Einfrieren mit Volumenzunahme die Magnetspule mit einer entsprechenden beschädigenden Kraft beaufschlagen könnte.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen und vereinfachten Längsschnitt einer Vorrichtung zur Durchflussregelung eines flüssigen oder gasförmigen Mediums, gemäß einem ersten Ausführungsbeispiel,
- Fig. 2: einen Schnitt einer Einzelheit der Vorrichtung in Fig. 1 in größerem Maßstab,
- Fig. 3: eine Draufsicht einer Einzelheit der Vorrichtung in Fig. 1,
- Fig. 4: einen schematischen Schnitt entsprechend demjenigen in Fig. 2 einer Einzelheit einer Vorrichtung gemäß einem zweiten Ausführungsbeispiel.

In den Zeichnungen ist eine Vorrichtung 10 zur Durchflussregelung eines flüssigen oder gasförmigen Mediums gezeigt, wobei diese Vorrichtung 10 insbesondere zur Dosierung eines zuzumischenden Fluids in ein Abgasreinigungssystem ausgebildet ist. Die Vorrichtung 10 weist einen Elektromagneten 11 auf, an den ein elektrischer Steckverbinder 12 angeschlossen ist. Der Elektromagnet 11 weist in einem Magnetgehäuse 13 eine Magnetspule 14 mit Magnetkern 15 und endseitiger Magnetplatte 16 auf. Der Elektromagnet 11 ist zur Betätigung eines gefriertauglichen Dosierventils 17 ausgebildet, das ein Ventilglied 18 in einem Ventilraum 19 eines Ventilkörpers 20 zur Steuerung eines dortigen Ventilsitzes 21 aufweist. Der Ventilkörper 20 ist in eine Aufnahme 22 eines Gehäuses 23 eingesteckt, das einen Fluideinlaß 24 und einen Fluidauslaß 25 enthält. Eine nur schematisch angedeutete Feder 26 erzeugt eine Federkraft, mit der das Dosierventil 17 über den Elektromagneten 11 in der Aufnahme 22 des Gehäuses 23 mit vorgegebener Kraft eingedrückt gehalten wird.

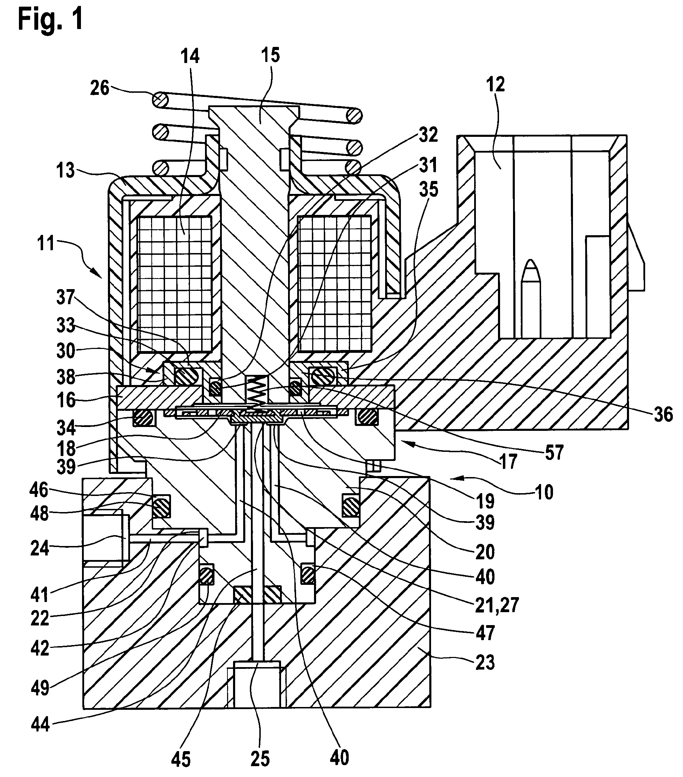

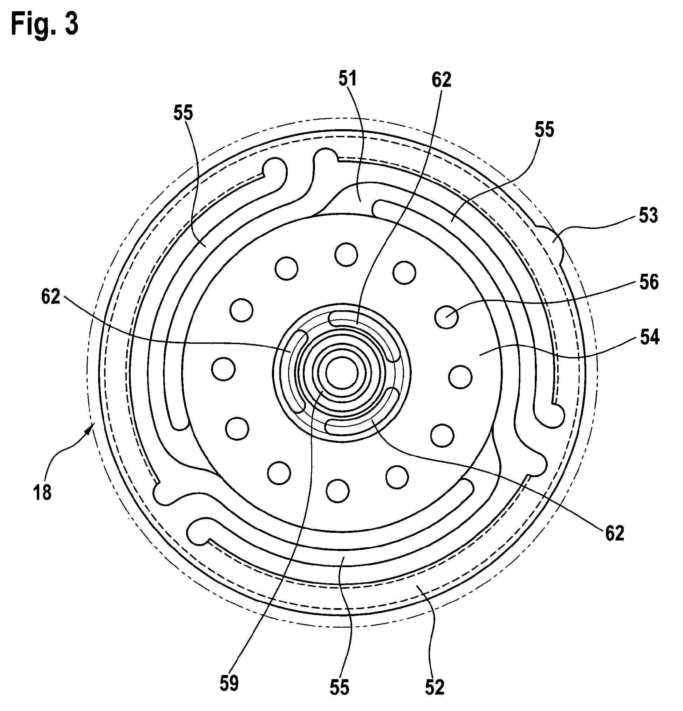

Insbesondere dann, wenn derartige Vorrichtungen 10 zur Dosierung von Reduktionsmitteln, insbesondere Harnstoff-Wasser-Lösungen, eingesetzt werden, z. B. für SCR-Abgasnachbehandlungseinrichtungen, ist das Dosierventil 17 insbesondere auf Gefriertauglichkeit auszurichten; denn aufgrund des hohen Wasseranteils in einer Harnstoff-Wasser-Lösung gefriert die in Betrieb unter Druck stehende Lösung schon bei geringen negativen °Celsius, z. B. bei minus 11° Celsius, wobei diese Lösung z. B. um etwa 10 % expandiert. Aufgrund dieses Verhaltens ist das Dosierventil 17 so auszulegen, dass dieses einerseits nicht beschädigt wird und anderseits ein gutes Einspritz-/Sprühverhalten hat sowie eine zuverlässige Abdichtung nach außen gewährleistet ist. Bei üblichen Ventilen kann das mittels des Ventilgliedes 18 gesteuerte Fluid auch in den Bereich der Magnetspule 14 gelangen. Bei der Steuerung eines zuvor beschriebenen Fluids würde die Magnetspule 14 als relativ weiches Bauteil beim Einfrieren und bei der Volumenzunahme um ca. 10 % deformiert und dadurch beschädigt. Um dem entgegenzuwirken, ist die Magnetspule 14 gegenüber dem Ventilraum 19 deformationsgeschützt. Die Magnetspule 14 ist gegenüber dem Ventilraum 19 mittels einer Dichtungseinrichtung 30 abgedichtet, wodurch verhindert ist, dass das Fluid überhaupt in den Bereich der Magnetspule 14 gelangt. Die Dichtungseinrichtung 30 weist eine zwischen der Magnetspule 14 und dem Magnetkern 15 und/oder der Magnetplatte 16 angeordnete Dichtung 31 auf, die als Umfangsdichtung um den Magnetkern 15 ausgebildet ist. Beim ersten Ausführungsbeispiel gemäß Fig. 1 bis 3 stellt die Dichtung 31 eine erste Dichtung dar, die zwischen der Magnetspule 14 und dem Magnetkern 15 vorgesehen und als radiale Dichtung ausgebildet ist, die in einer Ringnut 32 des Magnetkerns 15 liegt. Die Dichtungseinrichtung 30 weist beim ersten Ausführungsbeispiel gemäß Fig. 1 bis 3 ferner mindestens eine zweite Dichtung 33 auf, die zwischen der Magnetspule 14 und der Magnetplatte 16 angeordnet und als axiale Dichtung ausgebildet ist. Der zwischen der Magnetplatte 16 und Ventilkörper 20 ausgebildete Ventilraum 19 ist mittels einer Dichtung 34 nach außen abgedichtet, die zwischen der Magnetplatte 16 und dem Ventilkörper 20 angeordnet ist. Die Dichtungen 31, 33 und 34 bestehen jeweils aus O-Ringen.

Die Dichtungseinrichtung 30 weist einen metallischen Dichtungshalter 35 auf, der zwischen der Magnetspule 14 und dem Magnetkern 15 und der Magnetplatte 16 angeordnet ist, wobei der Dichtungshalter 35 mindestens eine der Dichtungen 31, 33, beim ersten Ausführungsbeispiel beide Dichtungen 31, 33, aufnimmt. Der Dichtungshalter 35 weist einen Ringteil 36 auf, der den Magnetkern 15 umfasst und sich an die Magnetspule 14 anschließt und die eine radiale Dichtung 31 enthält, die am Magnetkern 15 anliegt. Dieser Ringteil 36 ist als Zylinderhülse ausgebildet. Der Dichtungshalter 35 weist ferner einen axialen Ringteil 37 auf, der sich axial zwischen der Magnetspule 14 und der Magnetplatte 16 erstreckt und die axiale Dichtung 33 enthält, die an der Magnetplatte 16 anliegt. Dieser axiale Ringteil 37 schließt sich an den Ringteil 36 in Form der Zylinderhülse an und ist mit diesem einstückig. Der Dichtungshalter 35 ist als im Querschnitt U-förmiger Ring ausgebildet, wobei die U-Basis an der Magnetspule 14 anliegt, der innere U-Schenkel die den Magnetanker 15 umgebende Zylinderhülse bildet und der äußere U-Schenkel 38 sich axial zwischen der Magnetspule 14 und der Magnetplatte 16 erstreckt. Auf diese Weise ist die relativ weiche Magnetspule 14 mittels des metallischen Dichtungshalters 35 abgedeckt und geschützt und mittels der Dichtungen 31 und 33 zuverlässig in Bezug auf den das Fluid führenden Ventilraum 19 abgedichtet, so dass bei etwaigem Einfrieren bei tiefen Außentemperaturen und Volumenexpansion des Fluids diese vom Dichtungshalter 35 abgefangen wird und durch die Dichtungen 31, 33 das Fluid von der Magnetspule 14 ferngehalten wird und eine Beaufschlagung und etwaige Deformation der Magnetspule 14 verhindert ist.

In den Ventilraum 19 münden die Einlaßöffnungen 39 von z. B. drei Einlaßkanälen 40, die mit mindestens einem Zufuhrkanal 41 im Ventilkörper 20 verbunden sind, z. B. über einen Ringkanal 42. Der Zufuhrkanal 41 steht mit dem Fluideinlaß 24 in Verbindung. In den Ventilraum 19 mündet ferner mindestens eine Auslaßöffnung 43 mindestens eines vorzugsweise zentralen Auslaßkanals 44, der mit dem Fluidauslaß 25 in Verbindung steht.

Der Ventilsitz 21 ist als überstehender, etwa schneidenartiger Ringsitz 27 ausgebildet, wobei die Auslaßöffnung 43 in die Öffnung dieses Ringsitzes 27 ausmündet. Der Auslaßkanal 44 ist am unteren Ende des Ventilkörpers 20 in Bezug auf das Gehäuse 23 mittels einer axialen Dichtung 45 abgedichtet. Der Ventilkörper 20 ist stufenförmig. Er weist auf dem Axialbereich, der sich oberhalb des Zufuhrkanals 41 erstreckt, einen größeren Durchmesser auf als auf dem Axialbereich, der sich unterhalb des Zufuhrkanals 41 erstreckt. Auf beiden Axialseiten des Zufuhrkanals 41 enthält der Ventilkörper 20 in einer jeweiligen Ringnut 46, 47 eine Umfangsdichtung 48, 49, z. B. einen Dichtungsring, zur Abdichtung des Ventilkörpers 20 gegenüber der Aufnahme 22 im Gehäuse 23.

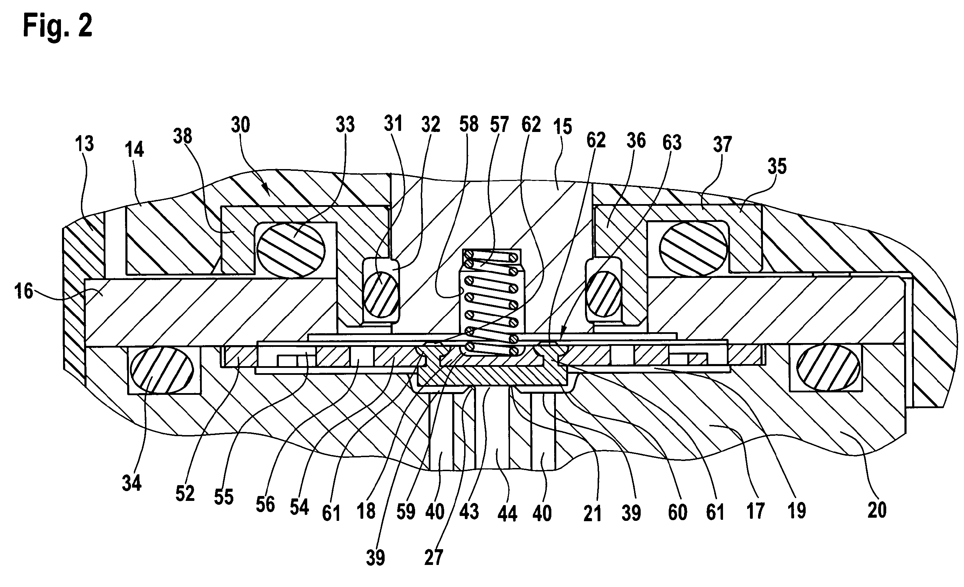

Das Ventilglied 18 weist einen Flachanker 51 geringer Masse im Ventilraum 19 zwischen der Magnetplatte und dem Ventilkörper 20 auf. Der Flachanker 51 ist Teil des Magnetkreises des Elektromagneten 11 und wird bei Erregung der Magnetspule 14 in Fig. 1 und 2 angezogen und nach oben bewegt, wodurch das Ventilglied 18 vom Ventilsitz 21 abhebt und den Durchlass des Fluids von den Einlaßkanälen 40 über die jeweilige Einlaßöffnung 39 und den Ventilraum 19 in die Auslaßöffnung 43 und zum Auslaßkanal 44 freigibt. Der Flachanker 51 weist einen äußeren Ring 52 auf, der zwischen der Magnetplatte 16 und dem Ventilkörper 20 gehalten ist, wobei eine radial vorspringende Nase 53 eine Verdrehsicherung bewirkt. Ferner weist der Flachanker 51 eine mittlere Ankerscheibe 54 auf, die über gebogene federnde Schenkel 55 mit dem Ring 52 verbunden und diesem gegenüber beweglich ist. Diese Ankerscheibe 54 stellt das bewegliche, den Ventildurchgang steuernde Element des Ventilgliedes 18 dar. Die Ankerscheibe 54 ist mittels Löchern 56 zum Fluidausgleich durchbrochen. Die federnden Schenkel 55 erzeugen eine federnde Rückstellkraft in Schließrichtung und Schließstellung gemäß Fig. 2. Sie wirken bei der Ventilbetätigung als Rückstellfedern. Am unteren Ende des Magnetkerns 15 ist in diesem mindestens eine Feder 57 enthalten, die z. B. als zylindrische Schraubenfeder ausgebildet ist. Die Feder 57 ist in einer Bohrung 58 des Magnetkerns 15 gehalten und darin zentriert. Mit dem anderen Ende ist die Feder 57 am Ventilglied 18 abgestützt und dort in einer Vertiefung 59 aufgenommen und zentriert. Die Feder 57 ist als Schließfeder und zur Sicherung eines vorgegebenen Gegendruckes ausgebildet. Sie trägt zusätzlich zu den federnden Schenkeln 55 der Ankerscheibe 54 zur Steigerung der Rückschalt-Geschwindigkeit des Dosierventil 17 bei.

Die Ankerscheibe 54 weist auf der dem Ventilsitz 21 zugewandten Seite eine Dichtungsplatte 60 auf, die in der Schließstellung auf dem Ringsitz 27 unter Abdichtung aufsitzt. Die Dichtungsplatte 60 liegt an der Unterseite der Ankerscheibe 54 auf. Über z. B. drei mit der Dichtungsplatte 60 einstückige Pfosten 61, die die Ankerscheibe 64 durchsetzen, ist die Dichtungsplatte 60 mit der Ankerscheibe 54 verbunden, wobei die Pfosten 61 über die Oberseite der Ankerscheibe 54 mit bogenförmigen Abschnitten 62 überstehen und jeweilige Dämpfungsglieder 63 bilden. Die Dichtungsplatte 60 ist mit den Pfosten 61 einstückig und besteht aus elastischem Material, z. B. einem Elastomer.

Das Dosierventil 17 befindet sich in Fig. 1 und 2 in der geschlossenen Stellung. Wird die Magnetspule 14 erregt und ein Magnetkreis erzeugt, wird durch diesen die Ankerscheibe 54 gegen die Wirkung der Feder 57 und der federnden Schenkel 55 in Fig. 1 und 2 nach oben bewegt. Dabei wirken die Pfosten 61 und Abschnitte 62 als Dämpfungsglieder 63, die bei dieser Bewegung ein etwaiges Anschlagen am Magnetkern 15 dämpfen. Die Feder 57 wird dabei zusammengedrückt. Bei Entregung der Magnetspule 14 erfolgt schlagartig und vorzugsweise innerhalb weniger als 5 msec ein Schließen des Ventilgliedes 18 aufgrund der Rückstellkraft der Feder 57 und der federnden Schenkel 55 der Ankerscheibe 54. Die Vorrichtung 10 hat den Vorteil, dass das Dosierventil 17 in kurzer Zeit von z. B. weniger als 5 msec öffnen und schließen kann und dabei ein sauberes, reproduzierbares Einspritzen des unter Druck, z. B. von 8 bar, zugeführten Fluids ohne Vor- und Nachtropfen bewirkt. Dabei ist sichergestellt, dass am Ventilausgang beim Auslaßkanal 44 keine Lufteinschlüsse im Fluid, insbesondere Reduktionsmittel, vorkommen, die sonst zum Nachtropfen führen würden. Die Magnetspule 14 ist mittels des metallischen Dichtungshalters 35 und im übrigen der Magnetplatte 16 abgedeckt und deformationsgeschützt. Ferner ist die Magnetspule 14 über die Dichtungseinrichtung 30, bestehend aus dem Dichtungshalter 35 mit der ersten radialen Dichtung 31 und der zweiten axialen Dichtung 33, in Bezug auf den Ventilraum 19 einfriersicher abgedichtet, so dass kein Fluid vom Ventilraum 19 ausgehend zur Magnetspule 14 gelangen kann und beim Gefrieren und bei der Volumenexpansion sonst die Magnetspule 14 deformieren könnte. Die Magnetspule 14 ist also einfriersicher geschützt. Die Umfangsdichtung 48 bewirkt eine einfriersichere Abdichtung nach außen. Die Umfangsdichtung 49 bewirkt eine einfriersichere Abdichtung zwischen dem Fluideinlaß 24 mit Zufuhrkanal 41 und dem Fluidauslaß 25 mit Auslaßkanal 44, wobei die axiale Dichtung 45 am unteren Ende des Ventilkörpers 20 als axiale Abdichtung zur Vermeidung von Lufteinschlüssen dient. Die axiale Dichtung 45 sorgt für eine von Lufteinschlüssen freie Verbindung zwischen dem Auslaßkanal 44 und dem Fluidauslaß 25. Eine solche ist nur im nicht gefrorenen Zustand erforderlich, da nur in diesem Zustand eine Dosierung mittels des Dosierventiles 17 geschieht. Sollte sich ein als Reduktionsmittel gesteuertes Fluid im Bereich zwischen der Aufnahme 22 und dem Ventilkörper 20 ansammeln und aufgrund dessen bei Minustemperaturen gefrieren und sich eine Volumenzunahme ergeben, kann die Einheit aus Elektromagnet 11 und Dosierventil 17 axial gegen die Wirkung der Feder 26 aus dem Gehäuse 23 herausgeschoben werden und auf diese Weise ausweichen, ohne dass eine Beschädigung oder gar Zerstörung des Dosierventils 17 geschieht. Die Vorrichtung 10 ist daher mit besonderem Vorteil für die Steuerung eines Mediums in Form eines Reduktionsmittels, insbesondere einer Harnstoff-Wasser-Lösung, für eine SCR-Abgasnachbehandlungseinrichtung geeignet. Dabei ist gewährleistet, dass selbst beim Gefrieren keine Beschädigung erfolgt und andererseits ein gutes Einspritzen/Sprühen erfolgen kann sowie ein zuverlässiges Abdichten nach außen gegeben ist. Da das Ventilglied 18 in Gestalt des Flachankers 51 eine sehr kleine Masse hat, ermöglicht das Dosierventil 17 ein schnelles Schalten, das heißt einen schnellen Wechsel zwischen Öffnen und Schließen, wobei das Öffnen und Schließen z.B. in weniger als 5 sec erfolgen kann und dadurch über eine Einspritzdüse ein sauberes Einspritzen des Fluids ermöglicht ist.

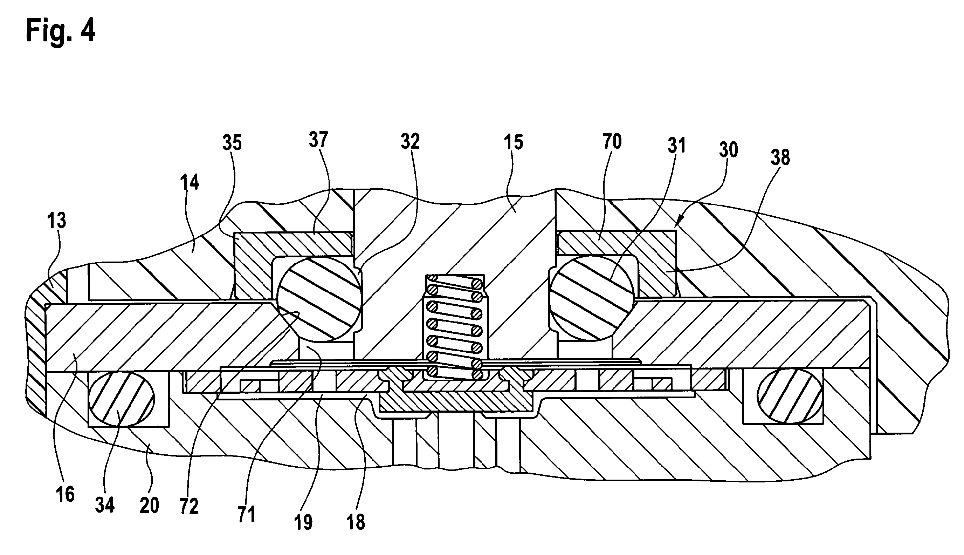

Bei dem in Fig. 4 gezeigten zweiten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

Das zweite Ausführungsbeispiel gemäß Fig. 4 unterscheidet sich vom ersten Ausführungsbeispiel dadurch, dass nur eine Dichtung 31 zwischen der Magnetspule 14 und dem Magnetkern 15 und der Magnetplatte 16 vorgesehen ist, die als radiale Dichtung ausgebildet ist. Der Dichtungshalter 35 weist nur den axialen Ringteil 37 auf, der als Ringscheibe 70 mit daran anschließendem äußeren Schenkel 38 ausgebildet ist, der sich etwa achsparallel zwischen der Magnetspule 14 und der Magnetplatte 16 erstreckt. Die Magnetplatte 16 weist eine zentrale Öffnung 71 auf und enthält im Bereich dieser eine etwa kegelstumpfförmige Einsenkung 72 als Anlagefläche für die radiale Dichtung 31. Auch bei dieser vereinfachten Gestaltung der Dichtungseinrichtung 30 ist eine zuverlässige Abdichtung der Magnetspule 14 gegenüber dem Ventilraum 19 gewährleistet.

## Patentansprüche

1. Vorrichtung zur Durchflussregelung eines flüssigen oder gasförmigen Mediums, insbesondere zur Dosierung eines zuzumischenden Fluids in ein Abgasreinigungssystem, mit einem Elektromagneten (11), der in einem Magnetgehäuse (13) eine Magnetspule (14) mit Magnetkern (15) und endseitiger Magnetplatte (16) aufweist und ein Ventilglied (18) in einem Ventilraum (19) eines Ventilkörpers (20) zur Steuerung eines dortigen Ventilsitzes (21) betätigt, wobei die Magnetspule (14) gegenüber dem Ventilraum (19) deformationsgeschützt und mittels einer Dichtungseinrichtung (30) abgedichtet ist, die mindestens eine zwischen der Magnetspule (14) und dem Magnetkern (15) angeordnete erste Dichtung (31), die als radiale Dichtung und als Umfangsdichtung um den Magnetkern (15) ausgebildet ist, und mindestens eine zwischen der Magnetspule (14) und der Magnetplatte (16) angeordnete zweite Dichtung (33) und einen Dichtungshalter (35) aufweist, der zwischen der Magnetspule (14) und dem Magnetkern (15) und der Magnetplatte (16) angeordnet ist und die Dichtungen (31, 33) aufnimmt und der einen Ringteil (36) aufweist, der den Magnetkern (15) umfasst und sich an die Magnetspule (14) anschließt und die erste radiale Dichtung (31) enthält, die am Magnetkern (15) anliegt,
wobei der Dichtungshalter (35) einen sich axial zwischen der Magnetspule (14) und der Magnetplatte (16) erstreckenden axialen Ringteil (37) aufweist, der an den als Zylinderhülse ausgebildeten Ringteil (36) anschließt und mit diesem einstückig ist,
**dadurch gekennzeichnet,**
**dass** der axiale Ringteil (37) die als axiale Dichtung ausgebildete zweite Dichtung (33) aufnimmt, die an der Magnetplatte (16) anliegt, und dass der Dichtungshalter (35) als im Querschnitt etwa U-förmiger Ring ausgebildet ist, wobei die U-Basis an der Magnetspule (14) anliegt, der innere U-Schenkel die den Magnetkern (15) umgebende Zylinderhülse (36) bildet und der äußere U-Schenkel (38) sich axial zwischen der Magnetspule (14) und der Magnetplatte (16) erstreckt.

2. Vorrichtung nach Anspruch 1,
**dadurch gekennzeichnet,**
**dass** der Dichtungshalter (35) metallisch ist.

3. Vorrichtung nach Anspruch 1 oder 2,
**dadurch gekennzeichnet,**
**dass** das Ventilglied (18) einen Flachanker (51) geringer Masse im Ventilraum (19) zwischen der Magnetplatte (16) und dem Ventilkörper (20) aufweist, der eine mittlere, über federnde Schenkel (55) beweglich verbundene Ankerscheibe (54) als betätigbares Ventilglied (18) aufweist, wobei die federnden Schenkel (55) als Rückstellfedern ausgebildet sind, und dass die Ankerscheibe (54) auf der Seite, die dem Ventilsitz (21) zugewandt ist, eine Dichtungsplatte (60) und auf der gegenüberliegenden Seite mindestens ein Dämpfungsglied (63) aufweist.

4. Vorrichtung nach Anspruch 3,
**dadurch gekennzeichnet,**
**dass** das mindestens eine Dämpfungsglied (63) Teil der Dichtungsplatte (60) ist und diese aus elastischem Material, z. B. einem Elastomer, gebildet ist.

5. Vorrichtung nach einem der Ansprüche 1 bis 4,
**dadurch gekennzeichnet,**
**dass** im Magnetkern (15) mindestens eine Feder (57), z. B. zylindrische Schraubenfeder, enthalten ist, die einerseits am Magnetkern (15) und andererseits am Ventilglied (18) abgestützt und zentriert ist und als Schließfeder und zur Sicherung eines Gegendruckes ausgebildet ist.

6. Vorrichtung nach einem der Ansprüche 1 bis 5,
**dadurch gekennzeichnet,**
**dass** ein in die Öffnung des Ventilsitzes (21) ausmündender Auslaßkanal (44) am Ende des Ventilkörpers (20) in Bezug auf eine Aufnahme (22) eines Gehäuses (23), das einen anschließenden Fluidauslaß (25) enthält, mittels einer axialen Dichtung (45) abgedichtet ist, und vorzugsweise, dass mindestens ein Einlaßkanal (40) des Ventilkörpers (20) mit mindestens einem Zufuhrkanal (41) im Ventilkörper (20) verbunden ist, der mit einem Fluideinlaß (24) des Gehäuses (23) in Verbindung steht, und vorzugsweise, dass der Ventilkörper (20) axial beidseitig des Zufuhrkanals (41) in einer jeweiligen Ringnut (46, 47) eine Umfangsdichtung (48, 49), z. B. einen Dichtungsring, zur Abdichtung des Ventilkörpers (20) gegenüber der Aufnahme (22) des Gehäuses (23) enthält, in die der Ventilkörper (20) eingesteckt ist.

## Claims

1. Device for a flow control of a liquid or gaseous medium, in particular for dosing a fluid to be admixed into an exhaust gas treatment system, comprising an electromagnet (11) that is provided, in a solenoid housing (13), with a solenoid coil (14) with a magnetic core (15) and an end-side magnet plate (16), and that actuates a valve member (18) in a valve compartment (19) of a valve body (20) for controlling a valve seat (21) there, wherein the solenoid coil (14) is protected against deformation with respect to the valve compartment (19) and sealed by means of a sealing device (30) that comprises at least a first seal (31) arranged between the solenoid coil (14) and the magnetic core (15), wherein the first seal (31) is arranged as a radial seal and as a circumferential seal about the magnetic core (15), and wherein the sealing device (30) comprises at least a second seal (33) that is arranged between the solenoid coil (14) and the magnet plate (16), and a seal holder (35) that is arranged between the solenoid coil (14) and the magnetic core (15) and the magnet plate (16), and that accommodates the seals (31, 33) and comprises an annular part (36) which encloses the magnetic core (15) and adjoins the solenoid coil (14) and that contains the first radial seal (31) that rests against the magnetic core (15),
wherein the seal holder (35) comprises an axial annular part (37) axially extending between the solenoid coil (14) and the magnet plate (16) and that adjoins the annular part (36) that is arranged as a cylindrical sleeve and integrally formed therewith,
**characterized in that**
the axial annular part (37) accommodates the second seal (33) that is arranged as an axial seal that rests against the magnet plate (16), and that the seal holder (35) is arranged as a ring that is basically U-shaped in cross-section, wherein the U-base rests against the solenoid coil (14), the inner U-leg forms the cylindrical sleeve (36) that encloses the magnetic core (15), and wherein the outer U-leg (38) axially extends between the solenoid coil (14) and the magnet plate (16).

2. Device according to claim 1
**characterized in that**
the seal holder (35) is metallic.

3. Device according to claim 1 or 2,
**characterized in that**
the valve member (18) comprises, in the valve compartment (19) between the magnet plate (16) and the valve body (20), a low mass flat anchor (51) that comprises, as actuable valve member (18), an intermediate anchor disc (54) that is movably connected via flexible legs (55), wherein the flexible legs (55) are arranged as rebound springs, and that the anchor disc (54), at the side thereof that is facing the valve seat (21), comprises a seal plate (60) and, at the opposite side, at least one damping member (63).

4. Device according to claim 2,
**characterized in that**
the at least one damping member (63) forms part of the damping plate (60) and is formed from elastic material, for instance an elastomer.

5. Device according to any of the claims 1 to 4,
**characterized in that**
at least one spring (57), for instance a cylindrical coil spring, is contained in the magnetic core (15) which is supported and centered, on one side, at the magnetic core (15) and, on the other side, at the valve member (18), and which is arranged as a closing spring and for securing a counter pressure.

6. Device according to any of the claims 1 to 5,
**characterized in that**
an outlet channel (44) that leads into the opening of the valve seat (21) is sealed by means of an axial seal (45) at the end of the valve body (20) with respect to a seat (22) of a housing (23) that contains an adjacent fluid outlet (25), and that, preferably, at least one inlet channel (40) of the valve body (20) is connected to at least one supply channel (41) in the valve body (20) that is in communication with a fluid inlet (24) of the housing (23), and that, preferably, a valve body (20) contains, axially on both sides of the supply channel (41) in a respective annular groove (46, 47), a circumferential seal (48, 49), for instance a sealing ring, for sealing the valve body (20) with respect to the seat (22) of the housing (23), in which the valve body (20) is inserted.

## Revendications

1. Dispositif de régulation de débit d'un milieu liquide ou gazeux, en particulier servant à doser un fluide à mélanger dans un système de purification de gaz d'échappement, comprenant un électroaimant (11), qui présente, dans un boîtier d'aimant (13), une bobine d'électroaimant (14) pourvue d'un noyau magnétique (15) et d'une platine magnétique (16) située à l'extrémité et qui actionne un organe de soupape (18) dans une chambre de soupape (19) d'un corps de soupape (20) afin de commander un siège de soupape (21) se trouvant à cet endroit, dans lequel la bobine d'électroaimant (14) est protégée contre toute déformation par rapport à la chambre de soupape (19) et est rendue étanche au moyen d'un système d'étanchéité (30), qui présente au moins un premier joint d'étanchéité (31) disposé entre la bobine d'électroaimant (14) et le noyau magnétique (15), lequel joint d'étanchéité est réalisé sous la forme d'un joint d'étanchéité radial et sous la forme d'un joint d'étanchéité périphérique autour du noyau magnétique (15), et au moins un deuxième joint d'étanchéité (33) disposé entre la bobine d'électroaimant (14) et la platine magnétique (16) et un support de joints d'étanchéité (35), qui est disposé entre la bobine d'électroaimant (14) et le noyau magnétique (15) et la platine magnétique (16) et qui reçoit les joints d'étanchéité (31, 33) et qui présente une partie annulaire (36), laquelle renferme le noyau magnétique (15) et se raccorde à la bobine d'électroaimant (14) et qui contient le premier joint d'étanchéité (31) radial, qui repose au niveau du noyau magnétique (15),
dans lequel le support de joints d'étanchéité (35) présente une partie annulaire (37) axiale s'étendant de manière axiale entre la bobine d'électroaimant (14) et la platine magnétique (16), laquelle se raccorde à la partie annulaire (36) réalisée sous la forme d'un manchon cylindrique et qui est réalisée d'un seul tenant avec ce dernier,
**caractérisé en ce que**
la partie annulaire (37) axiale reçoit le deuxième joint d'étanchéité (33) réalisé sous la forme d'un joint d'étanchéité axial, qui repose au niveau de la platine magnétique (16), et
que le support de joints d'étanchéité (35) est réalisé sous la forme d'un anneau présentant dans la section transversale approximativement une forme en U, dans lequel la base en U repose au niveau de la bobine d'électroaimant (14), la branche du U intérieure forme le manchon cylindrique (36) entourant le noyau magnétique (15) et la branche du U extérieure (38) s'étend de manière axiale entre la bobine d'électroaimant (14) et la platine magnétique (16).

2. Dispositif selon la revendication 1,
**caractérisé en ce que**
le support de joints d'étanchéité (35) est métallique.

3. Dispositif selon la revendication 1 ou 2,
**caractérisé en ce**
**que** l'organe de soupape (18) présente un induit plat (51) de faible masse dans la chambre de soupape (19) entre la platine magnétique (16) et le corps de soupape (20), lequel présente en tant qu'organe de soupape (18) pouvant être actionné un disque d'induit (54) central relié de manière mobile par l'intermédiaire de branches (55) à ressorts, dans lequel les branches (55) à ressorts sont réalisées sous la forme de ressorts de rappel,
et **que** le disque d'induit (54) présente, sur le côté, qui est tourné vers le siège de soupape (21), une platine d'étanchéité (60) et, sur le côté faisant face, au moins un organe d'amortissement (63).

4. Dispositif selon la revendication 3,
**caractérisé en ce que**
l'au moins un organe d'amortissement (63) fait partie de la platine d'étanchéité (60), et **en ce que** cette dernière est formée à partir d'un matériau élastique, par exemple un élastomère.

5. Dispositif selon l'une quelconque des revendications 1 à 4,
**caractérisé en ce**
**qu'**au moins un ressort (57), par exemple des ressorts hélicoïdaux cylindriques, est contenu dans le noyau magnétique (15), lequel prend appui d'une part au niveau du noyau magnétique (15) et d'autre part au niveau de l'organe de soupape (18) et est centré et est réalisé sous la forme d'un ressort de fermeture et afin de bloquer une contre-pression.

6. Dispositif selon l'une quelconque des revendications 1 à 5,
**caractérisé en ce**
**qu'**un canal de sortie (44) débouchant côté sortie dans l'ouverture du siège de soupape (21) est rendu étanche au moyen d'un joint d'étanchéité (45) axiale au niveau de l'extrémité du corps de soupape (20) par rapport à un logement (22) d'un boîtier (23), qui contient une sortie de fluide (25) dans le prolongement, et de préférence en ce qu'au moins un canal d'entrée (40) du corps de soupape (20) est relié dans le corps de soupape (20) à au moins un canal d'arrivée (41), qui est en liaison avec une entrée de fluide (24) du boîtier (23), et de préférence en ce que le corps de soupape (20) contient de manière axiale, de part et d'autre du canal d'arrivée (41), dans une rainure annulaire (46,47) respective, un joint d'étanchéité périphérique (48, 49), par exemple un anneau d'étanchéité, servant à rendre étanche le corps de soupape (20) par rapport au logement (22) du boîtier (23), dans lequel le corps de soupape (20) est emboîté.
